Europäisches Patentamt

European Patent Office

Office européen des brevets

(11) Publication number: **0 217 599 B1**

# EUROPEAN PATENT SPECIFICATION

(45) Date of publication of patent specification: **12.02.92** (51) Int. Cl.⁵: **H02P 6/02**

(21) Application number: **86307191.6**

(22) Date of filing: **18.09.86**

(54) **Brushless motor drive circuits.**

(30) Priority: **20.09.85 JP 208148/85**

(43) Date of publication of application:
**08.04.87 Bulletin 87/15**

(45) Publication of the grant of the patent:
**12.02.92 Bulletin 92/07**

(84) Designated Contracting States:
**AT DE FR GB**

(56) References cited:
**US-A- 4 412 159**
**US-A- 4 468 595**

(73) Proprietor: **SONY CORPORATION**
**7-35 Kitashinagawa 6-Chome Shinagawa-ku**
**Tokyo 141(JP)**

(72) Inventor: **Nanae, Yuuichi c/o Patents Div.**
**Sony Corporation**
**6-7-35 Kitashinagawa Shinagawa-ku**
**Tokyo 141(JP)**
Inventor: **Niikura, Hideo c/o Patents Div.**
**Sony Corporation 6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to brushless motor drive circuits.

A number of switching drive circuits for energizing brushless motors are known. Such a switching drive circuit sometimes utilizes switching transistors for switching the energization or phase for a brushless motor. When using such a switching drive circuit, a resulting high-frequency mechanical vibration of stators and rotors of the brushless motor generates relatively loud acoustic noises which are caused by abrupt current changes at the time of phase switching. The acoustic noises are most noticeable when caused by the changes occurring at the rising edges of the applied motor current. Conventionally, capacitors have been used to prevent the generation of the acoustic noises. The capacitors, such as electrolytic capacitors, having a comparatively large capacitance, are connected in parallel with the stator coils to slow current changes during phase switching.

This method using capacitors has disadvantages. For example, the method is not effective when the rotational speed of the motor is low. Moreover, use of capacitors degrades motor efficiency because of the phase delay of the energization current which occurs, and which in turn causes an inappropriate current to flow when the rotational speed of the motor is high.

A linear drive circuit for a brushless motor is also known which utilizes a sinusoidal energization current. While such a circuit is effective in reducing acoustic noise, the motor drive efficiency is substantially lowered by such a linear drive circuit compared with a switching drive circuit.

Accordingly, it has remained a problem to provide a motor drive circuit for a brushless motor which maintains motor efficiency comparable with that of a switching drive circuit, while reducing acoustic noises during phase switching.

US patent specification US-A-4 412 159 discloses a brushless motor drive circuit having features similar to those in the pre-characterizing part of claim 1.

According to the present invention there is provided a brushless motor drive circuit comprising:
a plurality of Hall elements for detecting magnetic flux changes of a rotating rotor magnet of a brushless motor; and
a drive signal generating circuit connected to said Hall elements for generating drive signals to be supplied to stator windings of of said motor, each of said drive signals having a pair of slanted edge portions with a relatively flat portion therebetween;
characterized in that;
each of said edge portions has an angle in the range 2° el. to 30° el, formed by shifting the level or amplifying the edge portions of trapezoidal output signals of said Hall elements; and
said flat portion is formed by a clamping circuit.

An embodiment of the invention may provide a brushless motor with a three-phase bi-directional, 120° energization system, by way of example. Output signals from a plurality of Hall elements are provided for detecting the position of the rotor, and providing an energization signal through accompanying circuitry, having edge portions similar to inclined waveforms of the edge portion of the output signals. The energization signals are supplied to stator coils of the brushless motor, whereby acoustic noise generation during switching is prevented without losing the efficiency of the switching drive system.

The waveforms of the Hall elements depend upon magnetic flux changes from rotor magnets in the brushless motor. Thus, the waveforms of the output signals of the Hall elements are almost trapezoidal, depending on the distances between the rotor magnets and the Hall elements, the positions or sizes of the non-magnetic regions of the rotor magnets, and other factors. The edge portions of the energization signals may be formed by shifting the level or amplifying the edge portions of the output signals of the Hall elements to provide the desired waveform. Accordingly, the edge portions of the energization signals do not become abrupt, and so the generation of acoustic noises is prevented. Because the output waveforms are utilized, no phase change occurs even if the rotational speed of the brushless motor varies. Moreover, since a trapezoidal drive signal is employed, motor efficiency is not lowered.

The invention will now be described by way of example with reference to the accompanying drawings, throughout which like parts are referred to by like references, and in which:

Figure 1 is a circuit diagram of a waveform-shaping circuit for shaping the output signals of Hall elements;
Figures 2A and 2B are diagrams of waveforms at selected points in the circuit of Figure 1 for showing the output waveforms from respective Hall elements;
Figure 3 is a circuit diagram of a circuit for developing the energization signals from the output of the circuit of Figure 1;
Figure 4 is a circuit diagram of a switching pulse generator for providing switching signals utilized in the circuit of Figure 3;
Figure 5 is a waveform diagram for describing the operation of the switching pulse generating circuit of Figure 4;
Figures 6A to 6H are waveform diagrams for use in describing the development of the energization waveforms in the circuit of Figure 3;

Figure 7 is a circuit diagram of a portion of another circuit;

Figure 8 is a circuit diagram of a portion of another circuit;

Figures 9A to 9E are waveform diagrams for use in describing the development of an energization waveform; and

Figures 10A to 10G are further waveform diagrams for describing the development of the energization waveform.

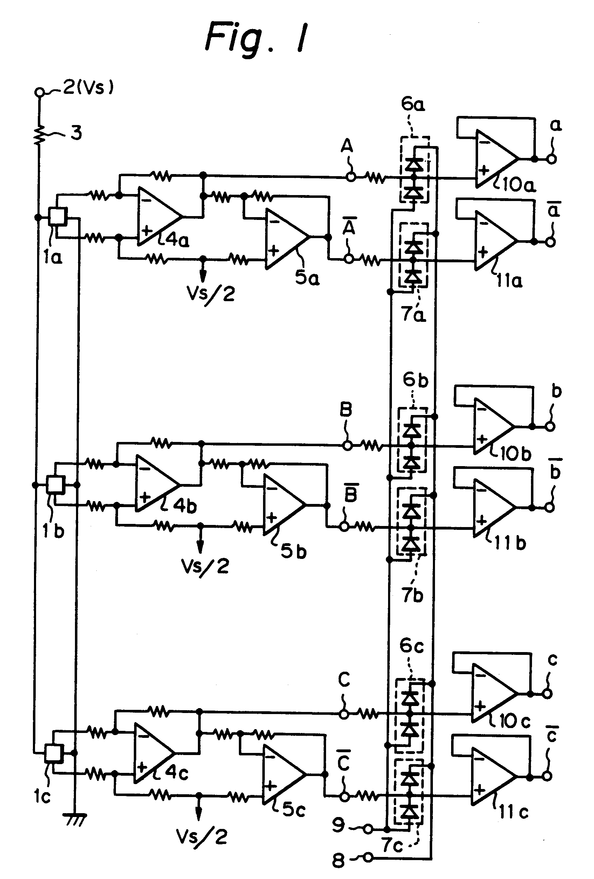

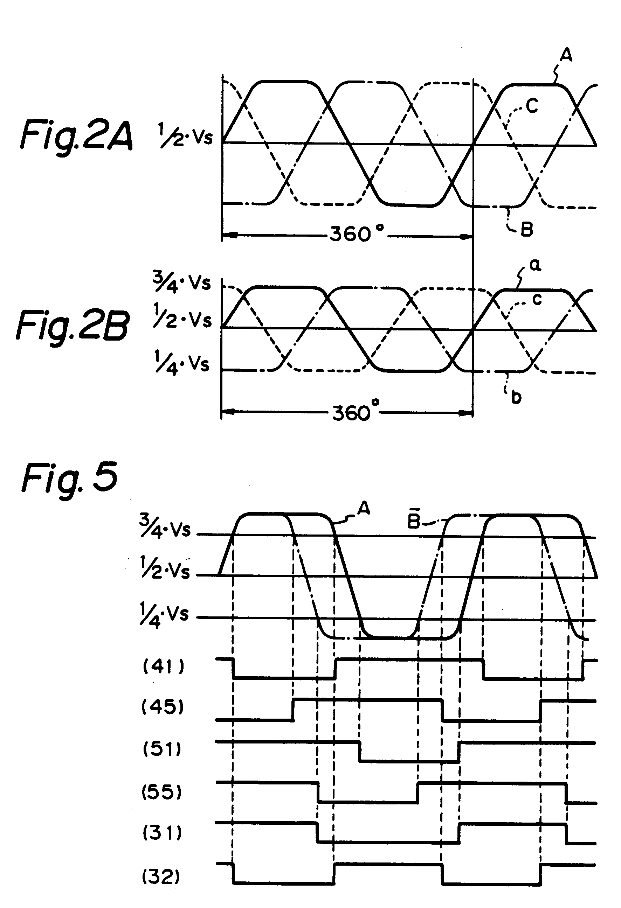

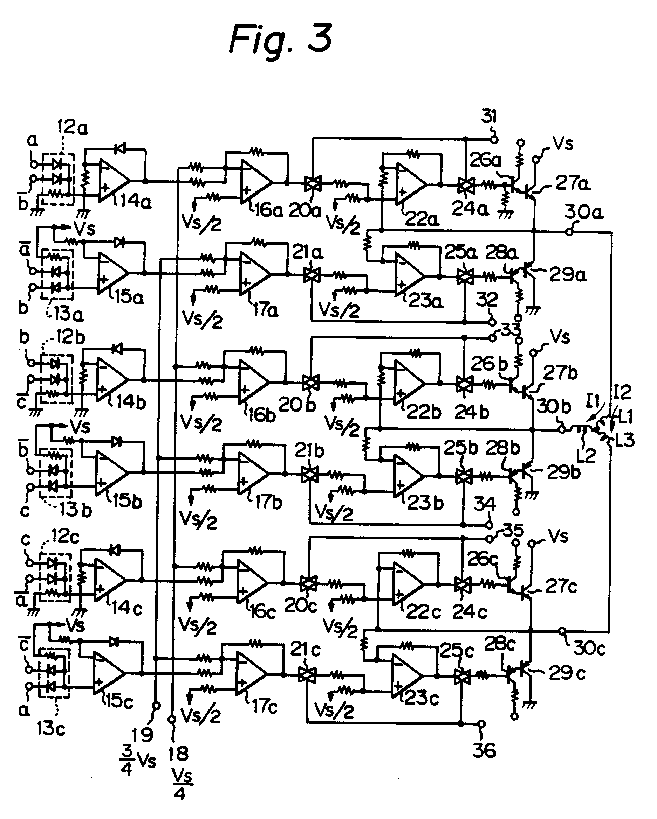

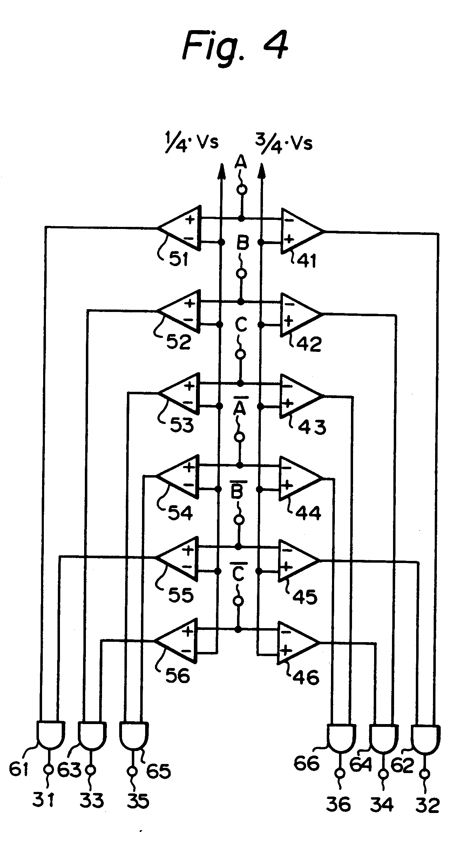

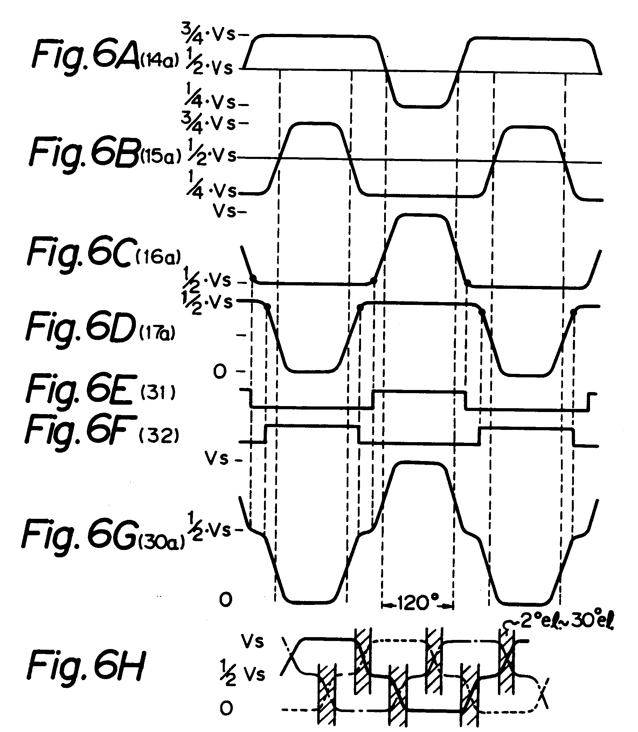

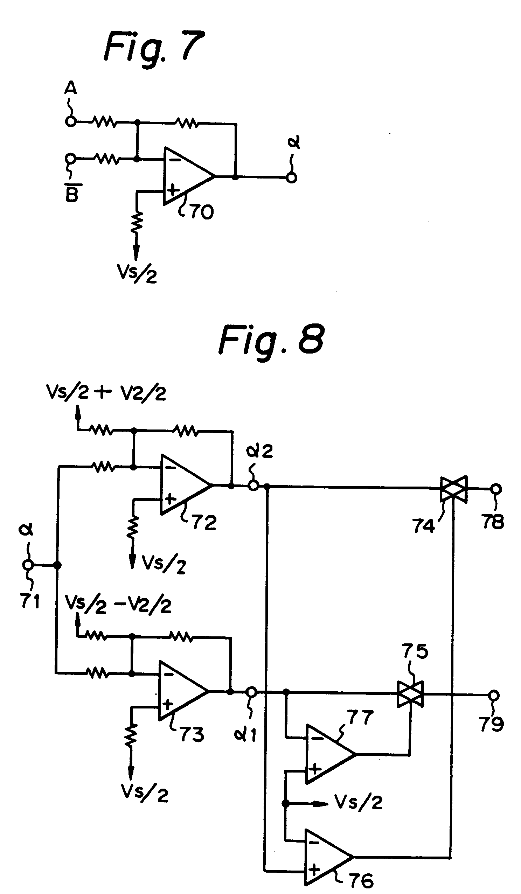

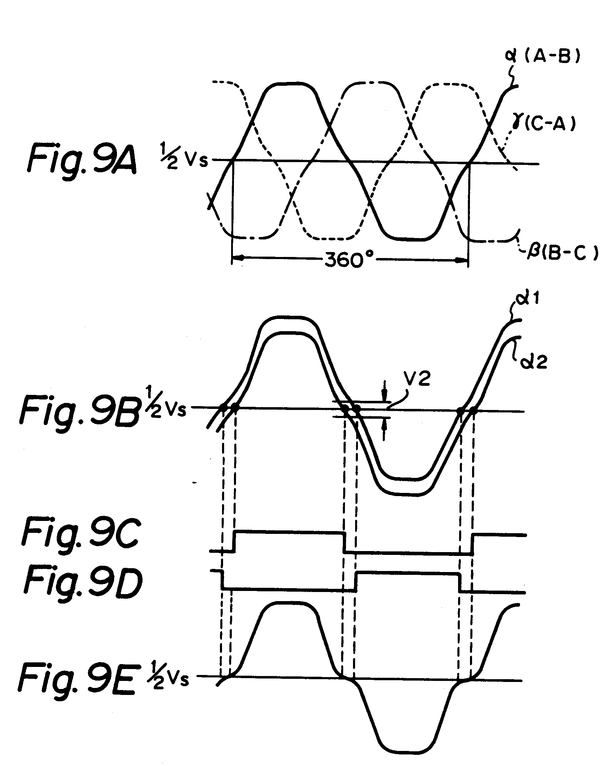

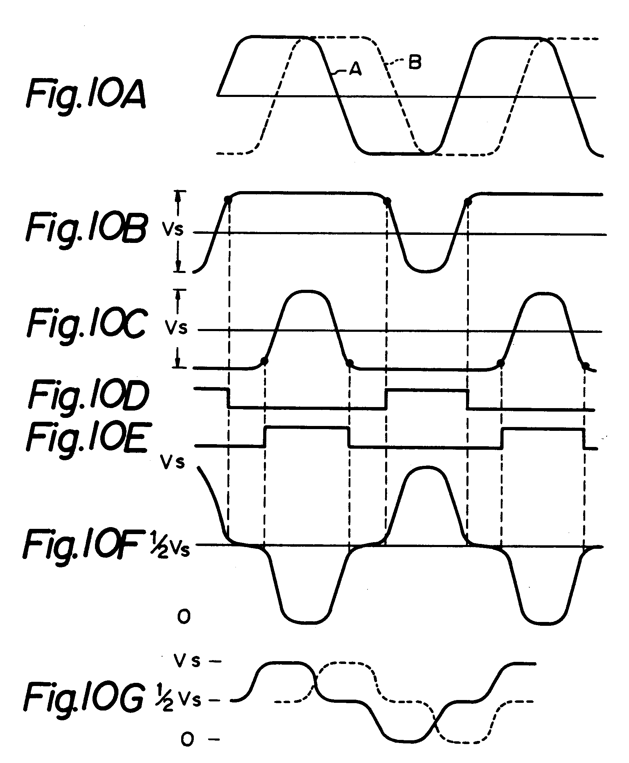

The description of the embodiments of the invention will be given in the following general sequence. First, the shaping of the waveform of the output signals of the Hall elements will be described with reference to Figures 1 and 2. Next, the circuit of Figure 3 for developing the energization waveform will be described, followed by a description of the circuit for generation of the switching pulses, with reference to Figure 4. Thereafter, the operation for developing the energization waveform will be described with reference to Figures 5 and 6, followed by a description of an alternative circuit with reference to Figures 7 and 8. The waveform shaping of the output signals of the Hall elements will then be further described with reference to Figures 9 and 10.

Waveform shaping of the output signals of the Hall elements

Figure 1 shows a circuit for shaping the waveform of the output signals from the Hall elements utilized in an embodiment of the invention. A plurality of Hall elements 1a, 1b and 1c are provided for generating output voltages proportional to the magnetic fluxes from the rotor magnets of a brushless motor. Each of the Hall elements 1a, 1b and 1c is driven by a drive voltage obtained from an external source of power Vs supplied to a power source terminal 2, through a resistor 3 connected in common with an input of each of the Hall elements 1a, 1b and 1c. In the circuit of Figure 1, the voltage Vs is maintained at a level equal to that supplied to the stator coils of the brushless motor.

The output from each of the Hall elements 1a, 1b and 1c is respectively amplified by pairs of operational amplifiers 4a, 5a; 4b, 5b; and 4c, 5c. In the amplifiers 4a, 4b and 4c, differential signals are converted into single-ended signals for inversion by the inverting amplifiers 5a, 5b and 5c. Thus, a detection signal A is obtained at the output of the amplifier 4a, while a complimentary detection signal $\overline{A}$ is obtained at the output of the amplifier 5a. The detection signals A and $\overline{A}$ are opposite in phase.

Similarly, detection signals B and C are obtained at the outputs of the amplifiers 4b and 4c, respectively, while complementary detection signals $\overline{B}$ and $\overline{C}$, opposite in phase to the detection signals B and C respectively, are obtained at the outputs of the amplifiers 5b and 5c.

Figure 2A shows the phase relationship between the respective detection signals A, B and C at the outputs of the amplifiers 4a, 4b and 4c, as shown in Figure 1. In Figure 2A, the waveform shown by the solid line represents the detection signal A, the waveform shown by the dotted/dashed line represents the detection signal B, and the waveform shown by the broken line represents the detection signal C. The detection signals A, B and C produced by the circuit of Figure 1 are each generally trapezoidal in shape, having a flat centre portion, and vary about an operating level of Vs/2. The respective detection signals A, B and C differ in phase from each other by 120° electrically. The leading and trailing edges of each of the detection signals A, B and C are inclined, so as to provide a waveform which corresponds to the sizes of the non-magnetic regions of the rotor magnets, the gaps between the rotor magnets and the Hall elements, and other factors.

As shown in Figure 1, the detection signal A is supplied to a diode clamping circuit 6a, while its complimentary signal $\overline{A}$ is supplied to a diode clamping circuit 7a. Similarly, the detection signals B, $\overline{B}$, C and $\overline{C}$ are respectively supplied to diode clamping circuits 6b, 7b, 6c and 7c. The diode clamping circuits 6a, 6b and 6c act to normalize the maximum level of the detection signals A, B and C to a clamping voltage supplied from a terminal 8 from an external clamping voltage source to each of the diode clamping circuits 6a, 6b and 6c. The magnitude of the clamping voltage applied to the terminal 8 is given by the expression 3Vs/4 - Vf, where Vf indicates a forward voltage drop of the diode. The magnitude of the voltage applied to a terminal 9 is given by the expression Vs/4 + Vf. The terminal 8 is in circuit with each of the diode clamping circuits 7a, 7b and 7c.

The output signal from the diode clamping circuit 6a is supplied to an input of an operational amplifier 10a acting as a buffer amplifier to provide an output signal a. Similarly, the output signals from the diode clamping circuits 7a, 6b, 7b, 6c and 7c are respectively supplied to an input of operational amplifiers 11a, 10b, 11b, 10c and 11c, each of which acts as a buffer amplifier similar to the operational amplifier 10a. The output signals from the operational amplifiers 10a, 11a, 10b, 11b, 10c and 11c, are respectively denoted by the letters a, $\overline{a}$, b, $\overline{b}$, c and $\overline{c}$, where, for example, the signal a is opposite in phase to the signal $\overline{a}$. The signals a, b and c are shown in Figure 2B.

The output signals of Figure 1, therefore, are generally trapezoidal detection signals having a maximum value of 3Vs/4, a minimum value of Vs/4, and a centre level of Vs/2, and the signal a is shown by the solid line in Figure 2B. The outputs of the operational amplifiers 10b and 10c, denoted by the letters b and c, are also generally trapezoidal in form, as seen in Figure 2B, having maximum, minimum and central levels similar to the signal a. Similarly, the complementary signals $\overline{a}$, $\overline{b}$ and $\overline{c}$ which are opposite in phase to the detection signals a, b and c, are respectively supplied from the operational amplifiers 11a, 11b and 11c, although not specifically shown in Figure 2B.

The above described detection signals a, b and c, and $\overline{a}$, $\overline{b}$ and $\overline{c}$ are used to develop the energization waveforms for the stator coils of the brushless motor as will be better understood from the discussion of Figures 3 and 6 below. The detection signals A, $\overline{A}$, B, $\overline{B}$, C and $\overline{C}$ form switching pulses, as discussed in connection with Figures 4 and 5.

Energization-waveform-developing circuit

Figure 3 shows a circuit for generating an energization-waveform for the embodiment of Figure 1. The detection signals a, b and c and their complementary detection signals $\overline{a}$, $\overline{b}$ and $\overline{c}$, as formed by the circuit of Figure 1 provide the inputs to the circuit of Figure 3. The output signals from the circuit of Figure 3 are respectively supplied to stator coils L1, L2 and L3 respectively. In the embodiment shown in Figure 3, a three-phase bidirectional energization circuit is shown in a structure in which an end of each of the respective stator coils L1, L2 and L3 is connected to each other, while the other end of each of the stator coils L1, L2 and L3 is connected respectively to an output terminal 30a, 30b and 30c of the circuit. Thus, the circuit structure of the energization-waveform for the stator coil L1 will be described in detail, the circuits for the stator coils L2 and L3 being substantially identical.

The detection signal a from the Hall element 1a and the detection signal $\overline{b}$ which is an inversion of the detection signal b from the Hall element 1b, are respectively supplied to a non-adding mixing circuit 12a comprising a pair of diodes and a resistor, connected as shown. A signal having a magnitude which is the larger of the signals a and $\overline{b}$ is thus produced from the non-adding mixing circuit 12a is supplied to an input of an operational amplifier 14a which acts to buffer and cancel the diode forward voltage drop (VF).

The detection signal $\overline{a}$, which is the inversion of the detection signal a, and the detection signal b are respectively applied to an input of a non-adding mixing circuit 13a, composed of diodes and a resistor as shown and similar to the mixing circuit 12a. A signal having a magnitude which is the lesser of the detection signal $\overline{a}$ and b is supplied by the non-adding mixing circuit 13a. The output signal from the non-adding mixing circuit 13a is supplied to an operational amplifier 15a similar to the operational amplifier 14a, for buffering and cancelling the diode forward voltage drop VF.

The output signals from the operational amplifiers 14a and 15a are respectively supplied to an inverting input of operational amplifiers 1 6a and 17a. The operational amplifiers 16a and 17a act as inversion amplifiers to shift the DC operating level. The inverting terminal of the operational amplifier 16a is connected through a resistance to a terminal 18 to which is supplied a direct current voltage having a magnitude of Vs/4 which is added to the input signal of the operational amplifier 16a. Similarly, a direct current voltage of 3Vs/4 supplied at a terminal 19 is added to the input signal of the operational amplifier 17a. The non-inverting terminal of each of the operational amplifiers 16a and 17a is connected to a voltage having a magnitude of Vs/2.

The output terminals of the operational amplifiers 16a and 17a are respectively connected to analogue switches 20a and 21a. The analogue switches 20a and 21a are respectively controlled by switching signals from terminals 31 and 32, provided by the circuit of Figure 4.

The output signal of the analogue switch 20a is supplied to an analogue switch 24a through an operational amplifier 22a acting as a buffer amplifier. The output signal of the analogue switch 24a is supplied to the base of an npn transistor 26a which acts as an output stage for the circuit. In a similar manner, the output signal of the analogue switch 21a is supplied to the base of a pnp transistor 28a at the output stage through an operational amplifier 23a and an analogue switch 25a. Each of the analogue switches 20a and 24a turns on when a switching pulse from the terminal 31 achieves a high level. Similarly, each of the analogue switches 21a and 25a turns on when a switching pulse at the terminal 32 assumes a high level. Thus, the analogue switches are respectively controlled in pairs by signals at the terminals 31 and 32.

The emitter of the transistor 26a is coupled to the base of an npn transistor 27a, while the emitter of the transistor 28a is connected to a base of an pnp transistor 29a. The collector of the transistor 27a is connected to a power source terminal to which is supplied a power source voltage Vs, while the collector of the transistor 29a is connected to a source of reference potential, such as earth. The emitters of the transistors 27a and 29a are mutually coupled to the output terminal 30a. A feedback loop is provided from the output terminal 30a to the inputs of the operational amplifiers 22a and 23a. Thus, an output voltage, which does not contain the base-emitter voltage drops of the transistors and is equal to the input voltage of the operational amplifiers 22a and 23a, is produced at the output terminal 30a.

Circuit structures similar to that described above for developing an output voltage generated at the output terminal 30a are also provided in connection with output terminals 30b and 30c, respectively. Specifically, a similar circuit is provided having as its input the detection signals b, $\overline{c}$ and $\overline{b}$, c, for developing an output at the terminal 30b, and another circuit having inputs c, $\overline{a}$ and $\overline{c}$, a, for developing an output at the terminal 30c. Thus, an output voltage taken from the output terminal 30b is formed from the detection signals b, $\overline{c}$, $\overline{b}$ and c, at the output of the circuit of Figure 1, while an output voltage derived from the output terminal 30c is formed from the detection signals c, $\overline{a}$, $\overline{c}$ and a. Thus, the components shown in the remaining circuit of Figure 3 are similar in function and operation to those described with respect to the same reference numerals above, but are appended with the letters b and c. It should be noted that a terminal 33 is provided as an input terminal for a switching pulse for controlling the analogue switches 20b and 24b, while an input terminal 34 receives a switching pulse for controlling the analogue switches 21b and 25b. Similarly, a switching pulse is supplied to a terminal 35 for controlling the analogue switches 20c and 24c, while a switching pulse is supplied to a terminal 36 for controlling the analogue switches 21c and 25c.

Generation of switching pulses

Figure 4 s hows a circuit for generating switching pulses applied to the terminals 31 to 36 of Figure 3. As shown in Figure 4, a plurality of level comparators 41 to 46 have their non-inverting terminals commonly connected and have their inverting terminals respectively connected to the non-inverting terminals of a like plurality of level comparators 51 to 56. The comparators 51 to 56 have their inverting terminals commonly connected. A reference voltage having a magnitude of 3Vs/4 is supplied to one of the input terminals of each of the level comparators 41 to 46. The level comparators 41 to 46 produce high level outputs when the level of each input voltage supplied to the other input terminal is lower than 3Vs/4 and, in the opposite case, produce low level outputs. A reference voltage having a magnitude of Vs/4 is applied to the other input terminal of each of the level comparators 51 to 56, which generate high level outputs when the level of each input voltage at one input terminal is higher than Vs/4 and, in the opposite case, generate low level outputs.

The detection signals A, B and C from the Hall elements 1a, 1b and 1c are supplied from the circuit of Figure 1 to the other input terminal of each of the level comparators 41, 42 and 43, and one input terminal of each of the level comparators 51, 52 and 53. Similarly, the inverted detection signals $\overline{A}$, $\overline{B}$ and $\overline{C}$ are supplied to the other input terminal of each of the level comparators 44, 45 and 46, and to one input terminal of each of the level comparators 54, 55 and 56. The outputs from the level comparators 51 and 55 are supplied to an AND gate 61, while the outputs from the comparators 52 and 56 are supplied to an AND gate 63. The outputs from the comparators 53 and 54 are supplied to an AND gate 65. Similarly, the outputs from the level comparators 41 and 45 are supplied to an AND gate 62; the outputs from the level comparators 42 and 46 are supplied to an AND gate 64; and the outputs from the comparators 43 and 44 are supplied to an AND gate 66. The AND gates 61, 63 and 65 respectively provide outputs at terminals 31, 33 and 35 which correspond to the switching pulse terminals in Figure 3. Similarly, the AND gates 62, 64 and 66 provide output pulses at the terminals 32, 34 and 36 which respectively provide switching pulses to the corresponding input terminals shown in Figure 3. The operation of the circuit of Figure 4 for generating switching pulses to the terminals 31 and 32 will be described, by way of example, by reference to Figure 5.

As shown in Figure 5, on the basis of the voltage level-relationship of the signal A, shown by a solid line, and the signal $\overline{B}$, shown by a broken line, with the reference voltages as previously indicated of Vs/4 and 3Vs/4, the output of the level comparator 41 assumes a high level when A is less than 3Vs/4. The output of the level comparator 45 assumes a high level when $\overline{B}$ is less than 3Vs/4. The output of the level comparator 51 assumes a high level when the magnitude of the detection signal A is greater than Vs/4, while the output of the level comparator 55 assumes a high level when $\overline{B}$ is greater than Vs/4. Consequently, the switching pulse produced by the AND gate 61 at the terminal 31, and the switching pulse formed by the AND gate 62 at the terminal 32 are those shown by corresponding reference numerals in Figure 5. Thus, the analogue switches 20a and 24a, and the analogue switches 21a and 25a turn on during periods in which these switching pulses have high levels, as previously described.

A similar analysis applies to the relative signal levels applied to the inputs of the AND gates 62 and 63 for generating switching pulses at the terminals 33, 34, 35 and 36.

Development of energization-waveforms

Figures 6A to 6H show waveforms for describing the development of an output voltage or an energization waveform generated at the output terminal 30a at Figure 3, using the switching circuit of Figure 4, by way of example. When the signals a and $\bar{b}$ are supplied to the non-adding mixing circuit 12a, a signal having a magnitude which is the larger of the magnitude of both signals, as shown in Figure 6A, is produced at the output of the operational amplifier 14a. Similarly, when the signals $\bar{a}$ and b are supplied to the non-adding mixing circuit 13a, a signal having a magnitude which is the smaller of the level of both signals, as shown in Figures 6B, is produced at the output of the operational amplifier 15a. The output signal of the operational amplifier 14a, as shown in Figure 6A, is the signal having a centre level of Vs/2, a maximum value of 3Vs/4, and a minimum value of Vs/4, as previously described. The output signal of the operational amplifier 15a, as shown in Figure 6B, is a signal having a similar series of levels. As shown in Figure 6C, a signal having a level of Vs/2~Vs is generated at the output of the amplifier 16a, as s result of the rising shift of the Vs/4 level shown in Figure 6A and its subsequent inversion. As indicated in Figure 6D, a signal having a level 0~Vs/2 is produced at the output of the operational amplifier 17a as a result of a decreasing shift of the Vs/4 level of the signal shown in Figure 6B and its inversion.

An almost high level period in the signal shown in Figure 6C is provided in the outputs of the analogue switches 20a and 24a by a switching pulse from the terminal 31, as shown in Figure 6E. By a switching pulse from the terminal 32, as shown in Figure 6F, an almost low level period in the signal shown in Figure 6D is provided at the outputs of the analogue switches 21a and 25a. Therefore, an output voltage obtained by the combination of the two signal waveforms gated by the analogue switches 21a and 25a is produced at the output terminal 30a, as shown in Figure 6G.

The output voltages formed in a manner similar to the formation of the output voltage described above at terminal 30a, are derived at the output terminals 30b and 30c, respectively, using appropriately gated voltage signals from the circuit of Figure 4. As thus shown in Figure 6H, a waveform indicated by a solid line shows an output voltage generated at the output terminal 30a; a waveform indicated by a broken line shows the output voltage generated at the output terminal 30b; and the waveform indicated by a dotted/dash line shows an output voltage appearing at the output terminal 30c. As can be seen in Figure 6H, the energization is sequentially accomplished for each of the stator coils L1, L2 and L3 for a slightly larger energizing range than 120$^\circ$.

Referring again to Figure 3, and assuming that a current flowing through the stator coils L1 and L2 is I1, and a current flowing through the stator coils L1 and L3 is I2, (where I1 is greater than I2), is established in the interval in which the output terminal 30a has a voltage signal having a magnitude Vs, the output terminal 30b thus has a voltage of magnitude Vs/2, and the output terminal 30c has a zero voltage. Then, by a gradual decrease in the magnitude of I1, accompanied by a gradual increase in the magnitude of I2, the voltage at the output terminal 30b and that at the output terminal 30c are equal to Vs/2 to provide the relationship of (I1 = I2). With a further decrease of I1 accompanied by a further increase of I2, the condition wherein (I1 is less than I2) is established. In other words, phase switching is performed gradually, and the generation of acoustic noises due to an abrupt current change is prevented at the time of the phase switching. In addition, an attenuation of the torque encountered with the phase switching can be cancelled with overlapped energization intervals at the time of phase switching at ever 120$^\circ$ of an electrical cycle.

In Figure 6H, even although the energization waveforms cross at points 3Vs/4 and Vs/4, the design may be modified so that the crossing occurs at points higher than 3Vs/4 and at points lower than Vs/4. Furthermore, in the interval in which the energization waveform assumes a constant level of Vs/2 , no current flows through one of the stator coils L1, L2 and L3, to achieve an improvement in motor efficiency as well as to prevent generation of an uneven torque.

For the above-described embodiment, the detection signals a, b and c having an amplitude of Vs/2 are formed with respect to the voltage Vs applied to the stator coils L1, L2 and L3. However, the signals for the energization may be provided by amplifying detection signals having an amplitude of (V1 - Vs/2n) (where n is an integer) when the amplitudes of the detection signals a, b and c are represented by V1. It may also be noted that an actual circuit is constructed so that the inclination of the inclined portions of the energization waveform are altered so as to vary the hatched region shown in Figure 6H within a range of electrical angles from about 2$^\circ$ to 30$^\circ$.

Alternative embodiment

Figures 7 and 8 show parts of another embodiment of the invention. This alternative embodiment develops the energization waveform using signals $\alpha$, $\beta$ and $\gamma$, shown in Figure 9A, which are formed by mutually subtracting two detection signals from the detection signals A, B and C, as shown in Figure 2A, of the three Hall elements 1a, 1b and 1c. Specifically, the signal $\alpha$ is formed by subtrac-

ting the detection signal A from the detection signal B (A - B); the signal $\beta$ is formed from (B - C); and the signal $\gamma$ is formed from (C - A). With this energization waveform using signals $\alpha$, $\beta$ and $\gamma$, a description of the development of an energization waveform for one phase will now be provided.

Figure 7 shows an example of an adding circuit for developing the signal $\alpha$. The adding circuit includes an operational amplifier 70 to which the detection signal A and the detection signal $\overline{B}$, which is the inversion of the detection signal B, are supplied as input signals. The signal $\alpha$, which is equal to (A + $\overline{B}$ = A - B) is consequently formed with the adding circuit. The signal $\alpha$ has a middle level of Vs/2 similar to the signal $\rho$ and $\gamma$.

As shown in Figure 8, the signal $\alpha$ is supplied at an input terminal 71 to the inverting terminals of an operational amplifier 72 and an operational amplifier 73. The operational amplifier 72 produces a signal $\alpha2$ which is level-shifted by a voltage value of +V2/2 and inverted. The operational amplifier 73 generates a signal $\alpha1$, which is level-shifted by a value of -V2/2 and inverted. In Figure 9B, the waveforms of the signals $\alpha1$ and $\alpha2$, which thus differ in magnitude by V2, are shown.

The signal $\alpha2$ is supplied to an analogue switch 74 and a level comparator 76. The signal $\alpha1$ is supplied to an analogue switch 75 and a level comparator 77. The level comparator 76 generates the switching pulse as shown in Figure 9C, which assumes a high level for a period in which the level of the signal $\alpha2$ is larger than the reference level of Vs/2. On the other hand, the level comparator 77 produces a switching pulse, as shown in Figure 9D, which assumes a high level for a period in which the level of the signal $\alpha1$ is smaller than the reference level Vs/2. Thus, the analogue switch 74 turns on during a period in which the switching pulse from the level comparator 76 is maintained at a high level. The waveform of the signal $\alpha2$ having a level greater than Vs/2 in an interval is supplied to an output terminal 78. The analogue switch 75 turns on during a period in which the switching pulse from the level comparator 77 is held at its high level, and the waveform of the signal $\alpha1$, whose level is smaller than Vs/2 in an interval, is supplied to an output terminal 79.

The stator coils are connected to the respective output terminals 78 and 79 through output circuits similar to those used in the first embodiment. Output voltages generated at the output terminals 78 and 79 by the output circuits are combined to provide a voltage having a waveform as shown in Figure 9E. The energization wavefor m shown in Figure 9E is similar to that shown in Figure 6G. As a result, an abrupt current change at the time of phase switching is prevented and energizing levels are overlapped, while intervals in which no current flows through a stator coil are formed. Thus, in this alternative embodiment, an inclined angle and an energization angle of an energization waveform are set on the basis of a offset amount, a reference voltage for the level comparators, and the like, as previously described.

The invention is applicable not only to a brushless motor of a three-phase bi-directional energization system, but also to a brushless motor having a three-phase 120° and unidirectional energization system, a two-phase 90° energization system, and a four-phase 90° energization system.

Figures 10A to 10F are waveform diagrams showing the development of energization waveforms in a case in which the invention is applied to a brushless motor of a two-phase bi-directional 90° energization system. Figure 10A shows the detection signals A and B of two Hall elements. Assuming that the detection signals A and B have an amplitude of VS, for example, in a manner similar to the first embodiment, the maximum values of both of the detection signals A and B are detected to form a signal as shown in Figure 10B. The minimum values of both detection signals A and B are detected to provide a signal as shown in Figure 10C.

The switching pulses shown in Figures 10D and 10E are generated from the detection signals A and B of the Hall elements. Thus, the signal shown in Figure 10B is inverted and level-shifted, and the waveform of the signal is derived in a period in which the switching pulse shown in Figure 10E is maintained at high level. By combining the two waveforms subjected to switching, an energization waveform as shown in Figure 10F is obtained. Thus, as indicated in Figure 10G, the energization waveforms denoted as a solid line and a broken line are supplied to the stator coils. The energization waveforms thus shown in Figures 10F and 10G have a slow current change at the time of the phase switching and features similar to those in the previous described embodiments.

Thus, with embodiments of the invention, since a current change is slow at the time of phase switching, generation of acoustic noises in a switching system is prevented. Because the detection signals of the Hall elements having inclined waveform are used as the inclined portions of the energization waveforms, no capacitor is needed, thus resulting in a low cost structure. In addition, even when the speed of the motor is low, such as at the time of starting, acoustic noise is nevertheless prevented. In addition, the degradation of motor efficiency, such as appears in the linear drive system, does not occur. Moreover, no alteration of the mechanical structure of the brushless motor is necessary.

## Claims

**1.** A brushless motor drive circuit comprising:
a plurality of Hall elements (1) for detecting magnetic flux changes of a rotating rotor magnet of a brushless motor; and
a drive signal generating circuit (6, 7, 12, 13, 20, 21) connected to said Hall elements (1) for generating drive signals to be supplied to stator windings (L) of said motor, each of said drive signals having a pair of slanted edge portions with a relatively flat portion therebetween;
characterized in that;
each of said edge portions has an angle in the range $2°$ el. to $30°$ el, formed by shifting the level or amplifying the edge portions of trapezoidal output signals of said Hall elements (1); and
said flat portion is formed by a clamping circuit (6,7).

**2.** A circuit according to claim 1 wherein portions of each of said slanted edge portions of an adjacent two of said drive signals form an overlapping drive area.

**3.** A circuit according to claim 1 wherein said drive signal generating circuit (6, 7, 12, 13, 20, 21) includes operational amplifier circuits (10, 11) connected to said Hall elements (1), clamping circuits (6, 7), non-adding mixing circuits (12, 13), analogue switching circuits (20, 21), and output amplifiers (26 to 29) respectively connected in series.

**4.** A circuit according to claim 3 wherein said drive signal generating circuit (6, 7, 12, 13, 20, 21) further includes switching pulse generating circuits (Figure 4) for generating switching pulses to be supplied to said analogue switching circuits (20, 21) based on said detected magnetic flux changes.

**5.** A circuit according to claim 1 wherein said drive signal generating circuit (6, 7, 12, 13, 20, 21) includes operational amplifier circuits (10, 11) connected to said Hall elements (1), signal mixing circuits (12, 13), analogue switching circuits (20, 21) and output amplifiers (26 to 29) in series.

**6.** A circuit according to claim 5 wherein said drive signal generating circuit (6, 7, 12, 13, 20, 21) includes means (Figure 4) for generating switching signals to be supplied to said analogue switching circuits (20, 21) based on outputs from said signal mixing circuits (12, 13).

## Revendications

**1.** Circuit de pilotage d'un moteur sans balai, comprenant :
plusieurs éléments (1) à effet Hall destinés à détecter les variations de flux d'un aimant rotatif de rotor d'un moteur sans balai, et
un circuit générateur (6, 7, 12, 13, 20, 21) connecté aux éléments (1) à effet Hall et destiné à créer des signaux de pilotage destinés à être transmis aux enroulements (L) du stator du moteur, chacun des signaux de pilotage ayant deux parties inclinées de flancs ayant une partie relativement plate entre elles,
caractérisé en ce que
chacune des parties de flancs forme un angle compris entre 2 et 30 degrés électriques, obtenu par décalage du niveau ou amplification des parties de bords de signaux trapézoïdaux de sortie des éléments (1) à effet Hall, et
la partie plate est formée par un circuit (6, 7) de fixation de niveau.

**2.** Circuit selon la revendication 1, dans lequel les portions de chacune des parties de flancs inclinées de deux signaux adjacents de pilotage forment une zone de pilotage par recouvrement.

**3.** Circuit selon la revendication 1, dans lequel le circuit (6, 7, 12, 13, 20, 21) générateur des signaux de pilotage comprend des circuits amplificateurs opérationnels (10, 11) connectés aux éléments (1) à effet Hall, des circuits (6, 7) de fixation de niveau, des circuits (12, 13) de mélange non additionneur, des circuits (20, 21) de commutation analogique, et des amplificateurs de sortie (26 à 29) connectés respectivement en série.

**4.** Circuit selon la revendication 3, dans lequel le circuit (6, 7, 12, 13, 20, 21) générateur des signaux de pilotage comporte en outre des circuits (figure 4) destinés à créer des impulsions de commutation destinées aux circuits de commutation analogiques (20, 21) en fonction des variations détectées du flux magnétique.

**5.** Circuit selon la revendication 1, dans lequel le circuit (6, 7, 12, 13, 20, 21) générateur des signaux de pilotage comporte des circuits amplificateurs opérationnels (10, 11) connectés aux éléments (1) à effet Hall, des circuits (12, 13) de mélange de signaux, des circuits (20, 21) de commutation analogique et des amplificateurs de sortie (26 à 29) en série.

6. Circuit selon la revendication 5, dans lequel le circuit (6, 7, 12, 13, 20, 21) générateur de signaux de pilotage comporte un dispositif (figure 4) destiné à créer les signaux de commutation destinés aux circuits (20, 21) de commutation analogique en fonction des signaux de sortie des circuits de mélange de signaux (12, 13).

**Patentansprüche**

1. Treiberschaltung für einen bürstenlosen Motor, mit

mehreren Hallelementen (1) zur Erfassung von magnetischen Flußänderungen eines rotierenden Rotormagneten eines bürstenlosen Motors,

sowie einer mit den Hallelementen (1) verbundenen Treibersignal-Generatorschaltung (6, 7, 12, 13, 20, 21) für die Erzeugung von Treibersignalen zur Speisung von Statorwicklungen (L) des Motors, wobei jedes dieser Treibersignale ein Paar von geneigten Flankenabschnitten aufweist, zwischen denen sich ein relativ flacher Abschnitt befindet,

**dadurch gekennzeichnet,**

daß jeder der Flankenabschnitte sich über einen elektrischen Winkel im Bereich von 2° bis 30° erstreckt, der durch Pegelverschiebung oder Verstärkung der Flankenabschnitte von trapezförmigen Ausgangssignalen der Hallelemente (1) gebildet wird,

und daß der flache Abschnitt durch eine Klemmschaltung (6, 7) erzeugt wird.

2. Schaltung nach Anspruch 1, bei der Teilabschnitte jedes der geneigten Flankenabschnitte zweier benachbarter Treibersignale einen überlappenden Treiberbereich bilden.

3. Schaltung nach Anspruch 1, bei der die Treibersignal-Generatorschaltung (6, 7, 12, 13, 20, 21) mit den Hallelementen (1) verbundene Operationsverstärkerschaltungen (10, 11) enthält sowie Klemmschaltungen (6, 7), nichtaddierende Mischschaltungen (12, 13), analoge Schalterkreise (20, 21) und Ausgangsverstärker, die jeweils in Reihenschaltung miteinander verbunden sind.

4. Schaltung nach Anspruch 3, bei der die Treibersignal-Generatorschaltung (6, 7, 12, 13, 20, 21) weiterhin Schaltungen (Fig. 4) aufweist für die Erzeugung von den analogen Schalterkreisen (20, 21) zuzuführenden Schaltimpulsen auf der Basis der detektierten magnetischen Flußänderungen.

5. Schaltung nach Anspruch 1, bei der die Treibersignal-Generatorschaltung (6, 7, 12, 13, 20, 21) mit den Hallelementen (1) verbundene Operationsverstärkerschaltungen (10, 11) aufweist, ferner Signalmischschaltungen (12, 13), analoge Schalterkreise (20, 21) sowie Ausgangsverstärker (26 bis 29), die in Reihenschaltung angeordnet sind.

6. Schaltung nach Anspruch 5, bei der die Treibersignal-Generatorschaltung (6, 7, 12, 13, 20, 21) Mittel (Fig. 4) aufweist zur Erzeugung von den analogen Schalterkreisen (20, 21) zuzuführenden Schaltsignalen auf der Basis von Ausgangssignalen der genannten Signalmischschaltungen (12, 13).

EP 0 217 599 B1

# Fig. 1

10

Fig.2A ½·Vs

Fig.2B ¾·Vs ½·Vs ¼·Vs

Fig.5 ¾·Vs ½·Vs ¼·Vs

(41)

(45)

(51)

(55)

(31)

(32)

# Fig. 3

# Fig. 4

Fig.6A (14a)

Fig.6B (15a)

Fig.6C (16a)

Fig.6D (17a)

Fig.6E (31)

Fig.6F (32)

Fig.6G (30a)

Fig.6H

Fig. 7

Fig. 8

Fig. 9A ½ Vs

α (A-B)

γ (C-A)

360°

β (B-C)

Fig. 9B ½ Vs

α1

α2

V2

Fig. 9C

Fig. 9D

Fig. 9E ½ Vs

Fig.IOA

Fig.IOB Vs

Fig.IOC Vs

Fig.IOD

Fig.IOE Vs

Fig.IOF ½Vs

O

Vs

Fig.IOG ½Vs

O